# EUROPEAN PATENT SPECIFICATION

(11) **EP 1 082 502 B1**
(45) Date of publication and mention of the grant of the patent: **02.02.2005**
(21) Application number: 99926431.0
(22) Date of filing: 26.05.1999
(51) Int. Cl.: E04F 10/06, H01L 31/042, A47L 4/00

(54) **AWNING WITH FLEXIBLE SOLAR MODULES**
MARKISE MIT FLEXIBLEN SOLARMODULEN
STORE PRESENTANT DES MODULES SOLAIRES FLEXIBLES

(30) Priority: 28.05.1998 DE 19823902; 04.06.1998 DE 19825017; 30.09.1998 DE 19844920; 01.04.1999 DE 19915169
(43) Date of publication of application: 14.03.2001
(73) Proprietor: Müller, Hermann-Frank, D-53177 Bonn (DE)
(72) Inventor: Müller, Hermann-Frank, D-53177 Bonn (DE)
(86) International application number: PCT/EP1999/003645
(87) International publication number: WO 1999/061721

(56) References cited:
- EP-A- 0 039 632
- EP-A- 0 351 459
- EP-A- 0 627 533
- DE-A- 2 836 938
- DE-A- 3 302 934
- DE-A- 3 909 937
- DE-A- 4 031 471
- DE-A- 4 241 781
- DE-A- 19 627 394
- DE-A- 19 731 853
- FR-A- 2 017 500
- FR-A- 2 742 002
- US-A- 4 835 918

## Description

Sun visors, blinds, or awnings as protective means against sun radiation are useful in many applications and are known in the prior art for buildings and vehicles, for example, motor homes.

U.S. patent 5, 076,634 discloses a sun visor for vehicles. It has solar modules mounted on an outwardly facing surface for converting sun radiation into electrical energy to be stored in appropriate storage cells.

From German Patent 38 32 688 a rigid awning is known which is comprised of a frame (1) that has a light-transmissive foil (3) attached thereto. At the upper side a cutout is provided that receives solar modules (7) mounted on a support (8). The electricity produced by the solar modules (7) is stored in storage means (4) mounted on a base plate (2) and is used for illumination purposes. The rigid mounting of the awning presents a drawback since the awning cannot be retracted depending on weather conditions.

German patent application DE 196 20 619 describes a rollable blind for roof windows designed to reduce the amount of heat generated in an apartment by sun radiation entering through the slanted windows. The blind can be automatically rolled up (retracted) or rolled down (extended) by a motor. The energy for operating the motor may be derived from solar modules mounted separately from the blind.

U.S.Patent 5,433,259 shows a retractible awning comprising an articulated slat system at the end where the awning is connected to a building, a camping trailer or a motor home. The slat system provides a protective cover for the awning and carries a solar panel on one of the slats.

The solar panel is of a relative small size compared to the surface area of the awning in the extended position. The amount of energy conversion achievable with such an arrangement is therefore relatively small.

German Patent 39 09 937 A discloses an awning comprising a combination of all of the features of the preamble of claim 1. The awning is for use on a hood/top as a retractable/rotating mat made out of a weather-resistant material or, in the manner of rotating blinds/shades, out of a single plastic laminates, each provided with flexible solar cells, which supply electrical energy merely for aggregates internal to a vehicle. A use for the awning outside of vehicles is not provided. Also, in each case a load bearing support for the solar cells is provided. The motor for driving the awning rollers is arranged outside the rollers.

German Patent 33 02 934 A1 discloses a solar generator in the form of a textile mat, their fibres having a coat of semiconductor material with contact metal (see abstract). In case it is necessary, it is possible to put together two textile mats or more.

German Patent 28 36 938 discloses an awning, in which the drive motor is arranged in the roller to provide energy for the turning operation of the rollers as well as battery to serve for supplying energy to the electro-drive motor.

French Patent 20 17 500 describes the construction of some solar modules each connected with a part of a common coat.

Frensh Patent 27 42 002 describes a battery with cooling means. Such a battery is necessary, especially , for storing electrical energy of the solar modules.

The known sun visors or awnings that have solar modules mounted thereon. All show solar modules of a small size that therefore provide only a limited amount of renewable energy. Some of the shown arrangements of the solar modules also require a solid support structure and therefore are limited with regard to their design.

It would therefore be desirable to have a reductable awning that provides solar modules across a large surface area and also allows many design variations having short circuit wiring to transfer electrical energy to a consumer when the awning is far from the building, the camping trailer, or the motor home.

### Summary of the invention

The invention is defined in claim 1. Preferred embodiments thereof are introduced by claims 2 to 20.

The support material between the solar module strips comprises light collectors (based, for example, on fluorescent compounds) that will provide additional energy to the solar modules.

The inventive awning will be disclosed in the following with the aid of particular embodiments in conjunction with the accompanying drawings. It is shown in:
- Fig. 1: an inventive awning in a partial view from below;
- Fig. 2: a roller arrangement with canopy in a partial view;
- Fig. 3: the arrangement of a motor drive for the roller in a partial view;
- Fig. 4: a pump schematic for pumping water for the cleaning device for cleaning the surface of the canopy;
- Fig. 5: a schematic representation of two adjacently arranged awnings; and
- Fig. 6: a schematic view of an arrangement having a common support structure with four awnings attached thereto, wherein the awnings can be extended to the right and/or the left of the central support and wherein the drawing shows all four awnings in their extended position.

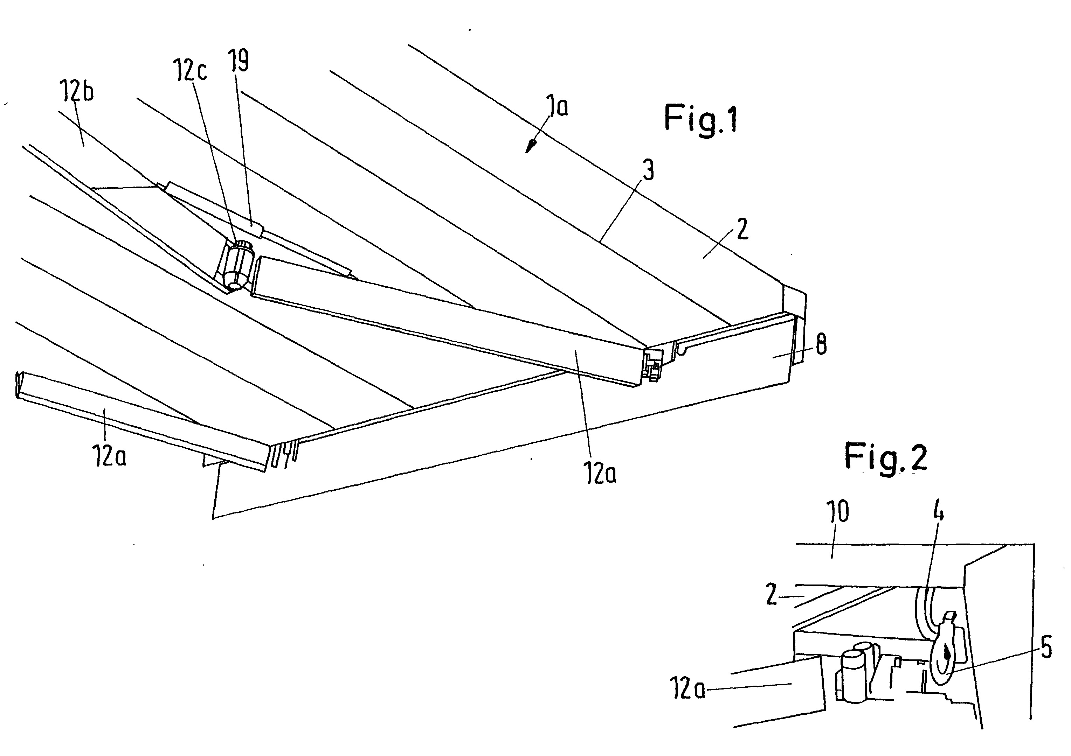

Fig.1 shows the inventive awning 1 in a partial view of the underside. The solar modules in form of solar module strips 2 are flexible and mounted on a support so that the canopy can be easily rolled onto a roller 4. According to Fig.1, the solar module strips 2 extend in the direction of movement (retraction and extansion) of the awning 1. However, an arrangement of the solar modul strips 2 perpendicularly to the direction of movement is also possible. The adjacently positioned solar modul strips 2 are connected to one another in a water-tight manner whereby the design of the seams 3 will be obvious to a person skilled in the art depending upon the material to be used. It is also possible to provide a detachable connection of the solar module strips 2 to the support material in case that an exchange of the solar module strips 2 should be necessary when individual strips 2 are damaged. Of course, if necessary, individual solar module strips 2 can be replaced by support material, for example, when the damaged solar module strip 2 cannot be replaced in a timely manner, in order to be able to still operate the awning 1. Although not apparent in the figure, the solar module strips 2 are arranged with spacing therebetween so that the solar module strips alternate with canopy support material strips. The individual solar module strips may be attached to a support material and the resulting individual strips (support material strip and attached solar module strip) may then be connected to one another.

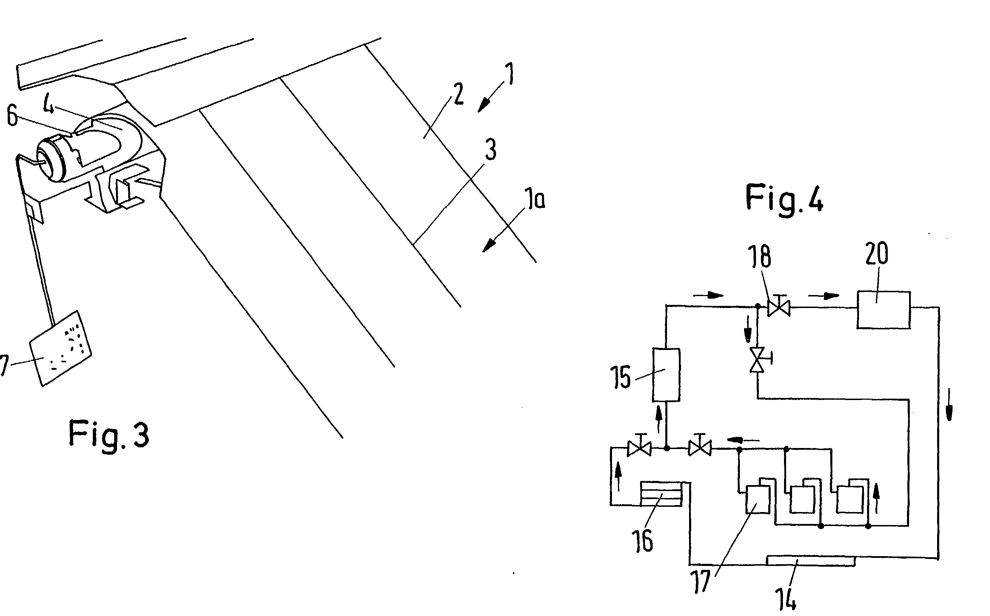

The canopy with the solar module strips 2 that are connected to one another and the canopy support material strips are rolled up onto or rolled down from the roller 4 and are maintained in a stretched position by the jointed supports 12a,12b. This extension or retraction can be performed manually by a non-represented crank connected to the roller 4 provided with an eye 5 whereby the hooks of the crank will engage the eye 5 (see Fig.2) or can be achieved by an electric motor 6. The motor 6 is mounted within the roller 4 and can be operated by actuating a switch or by an electronic control unit, for example, with the aid of a timer 7 or according to certain weather-related parameters, such as sunlight intensity, humidity, temperature, wind, etc. (see Fig.3), measured by sensors connected to the control unit.

In order to protect the solar module strips 2 against external influences, they may be provided, individually or the entire canopy surface, with a protective coating which will not inhibit the light transmission. The type of protective coating to be selected depends substantially on the required speciflcations and can be selected as desired. For example, a water-repellent coating can be provided or a wear-resistant coating or a soiling resistant coating etc. The wear-resistant coating, for example, will protect against wear resulting from cleaning by a brush or the friction caused upon retraction and extension of the canopy. A soiling resistant coating will reduce, due to its antistatic properties, adhesion of dirt particles. A protective layer against ice formation on the canopy is also possible.

In order to store the energy that is produced by the solar module strips 2, storage cells such as batteries are required which can be positioned within the roller 4. A compact and self-contained awning is thus realized. For example, polypyrrole or lithium foil-based batteries having layers of the respective material can be used as electrode material, whereby the layers are embedded in gel. The batteries positioned within the roller 4 can be combined and connect to one another by current-conducting tracks which may have a plug-in device (electrical connector or socket) so that one is able to tap the energy stored in the batteries for eternal use. For example, it is possible to use the stored energy for a possible illumination of the free end of the awning canopy 1a that may have provided thereat an advertisement or company name on a strip 8. When the awning is connected to a building or house, the stored electrical energy can be used for garden maintenance (lawn mowers, trimmers, hedge clippers etc.) or for lighting at night for security reasons or illumination of advertisements or company name plates etc.

For cleaning the surface of the awning material 1a, it is possible to provide a cleaning device 20 with brush at the awning cover 10 which must be supplied with water for the cleaning step. When the awning 1 is mounted at the wall of the building, the supply of tap water is easily realized, optionally by providing a storage container 17, so that it is possible to clean the surface of the canopy 1a by simply retracting or extending the canopy multiple times so that the cleaning device 20 with brush will act on the entire surface area of the canopy. However, when the supply of tap water is difficult to realize, a sufficiently large storage container 17 for cleaning water must be provided. Whether sufficient space is available in the interior of the roller 4 for such a container 17 depends on the size of the awning. However, sufficient space will be available in the hollow supports 12a, 12b provided for stretching the canopy 1a or it is possible to attach container 17 at the exterior side of the supports 12a, 12b so that they are not visible by persons sitting under the awning. It is furthermore, possible to provide a precipitation (rain or snow water) collecting device 14 at the free end of the awning material 1 a opposite the roller 4, for example, a rain gutter-type arrangement, which may collect, in addition to the rain water or melting snow, the water dispensed by the cleaning device 20. The water collected in the collecting device 14 is pumped by a pump 15 through a coarse and a fine filter 16 and is then directly supplied to the cleaning device 20 for further use, i.e., it is used to refill the water reservoir 17. Shut-off valves 18 are provided that are automatically operated and prevent overfilling of the reservoir 17. A water overflow may be provided at the collecting device14.

As mentioned above, the inventive awning 1 not only can be used as protection against sun radiation and against precipitation, but can also be used, because of the presence of the solar module strips 2, to provide electrical energy derived from the sunlight. The efficiency of the solar modules depends on the intensity of the sunlight. Additional solar modules may be attached to the underside of the canopy in order to produce additional energy. This means that during the day the effect of the sun radiation will provide the greatest possible energy efficiency while at night the conversion to useful energy is practically zero. However, in cases where strong illumination devices are present in the adjacent areas, for example, in sports stadiums etc, it is possible to use the light radiation from the strong illumination devices which are used for illumination of only a certain area, but will emit horizontally propagated light rays so that the surrounding areas are also illuminated. When these light rays impinge on the solar modules of the inventive awning, they can also be converted into electrical energy. Even though the energy yield may be low, an additional energy source is thus provided for the already present solar modules. Thus, an additional source of energy conversion is realized which otherwise would not be possible at night.

For this particular use, it is best to extend the canopy from the roller 4 such that it is positioned perpendicularly downwardly relative to the roller. For this purpose, the supports 12a, 12b must be prevented from stretching the canopy substantially forwardly and horizontally which is accomplished by the hydraulic or pneumatic device 19 that bridges the joint 12c of the two arms of the supports 12a, 12b. This can be achieved, for example, by a pivotable holder for the supports 12a, 12b positioned below the roller 4 that allows a downward positioning of the supports 12a, 12b. In the simplest scenario, the canopy 1 a will be detached from the supports 12a, 12b and the pneumatic or hydraulic actuation will be deactivated. The canopy will then roll automatically downwardly when extended. Of course, by providing a pivotable arrangement of the supports 12a, 12b, the canopy will be supported and stretched and thus be of a much stiffer and secure. When a pivoting mechanism is provided at the joints 12c, the canopy, when extended and pivoted at the joints 12c, is positioned substantially at a right angle (or any other suitable angle, preferably greater than a right angle) with approximately half its surface area in a downward position. Either the entire canopy surface area or the forward half that is folded down is thus exposed to the light rays coming from the illumination devices operating at night. The light received from the illumination devices can thus be converted into energy. As a further advantage, it should be noted that the folded arrangement, i.e., forward canopy half is folded down, also provides wind protection for persons seated under the awning.

The folding mechanism, i.e., folding the awning at approximately half its length downwardly, can also be used during the day to provide extra protection from the elements, e.g., the sun, wind, rain. A pivotable holder, when adjustable over the pivot range, can also be used to vary the angle at which the awning is positioned relative to the sun.

The batteries (storage cells) are preferably mounted within the roller 4 for storing energy produced by the solar module strips mounted on the support material. This self-contained awning can be detached from the building or vehicle and stored away or mounted at a different location. This is especially advantageous in connection with vehicles and trailers.

Since the energy storage in a battery and also the use of energy stored in batteries results in heat being produced due to the chemical processes occurring, it is necessary to remove excess heat from the arrangement.

This can be solved in multiple ways.

When the batteries are positioned in the roller 4 that is provided for retracting and storing as well as extending the canopy, the heat dissipation caused by natural events such as airflow (wind) is often insufficient, especially since the roller 4 is usually mounted at a protected location along the wall of a building or a vehicle so that air flow only will pass along a portion of the roller 4. This cannot be sufficiently improved by providing the roller 4 with a fan, especially since such a fan would also require energy, and because the air flow produced by the fan only has a minimal reach. A separate tube as a housing for receiving the batteries may be mounted at the free end of the canopy. This would provide sufficient natural air flow about the entire circumference of the tube and the entire length of the tube so that, by doing so, the heat dissipation would be considerably improved without increasing cost of electrical cable connections to the batteries or storage cells by a considerable amount. Furthermore, the space that is then available within the roller 4 could be used for mounting therein other devices or reservoirs as disclosed above.

Another possibility of heat dissipation is the use of a cooling liquid know in various forms and preferably in the form of water. Since the amount of heat energy to be dissipated is relatively small, the required components such as cooling tubes, heat exchanger, pump, are all small and can be easily installed, for example, at the wall to which the awning is connected or at one of the supports 12a, 12b of the awning. These additional components can be even smaller when instead of cooling water a special type of cooling liquid, for example, Galinstan, is used which has a substantially improved heat conductivity, compared to water.

A possibility for energy storage is also the use of highly efficient capacitors (for example, electric double layer capacitors available from Panasonic), especially when made of environmentally safe materials, that are to be used instead of batteries because in this manner no chemical reactions take place and no heat is produced. The installation of such highly efficient capacitors depends on whether their construction allows a rotary movement about their axis (when mounted in the roller) whithout their efficiency being negatively effected by rotation whithin the roller. When this is the case, it is possible to arrange them whithin the roller 4. In other cases, highly efficient capacitors are stationarily mounted, for example, in one of the supports 12a, 12b.

The energy stored within the batteries, accumulators, or the highly efficient capacitors can be used for operating different electrical consumers depending on the specific needs of the customer. For example, the energy can be used in connection with functions relating to the awning itself, for example, the retraction or extension of the awning from the roller, which may be controlled so as to be performed by a control unit based on a timer or sensors measuring various parameters such as temperature, humidity, sunlight intensity etc. It is expedient to perform certain operations as a function of time and/or environmental influences, for example, by arranging certain sensors cooperating with an electronic control unit that will provide a controlling function according to preset parameter limits. The artisan will be able to determine easily which range and magnitude the respective parameter limits should have and how to connect these senors most effectively.

The stored energy can also be used for operating the cleaning devices of the canopy and/or for water storage (collecting rain water and melted snow and pumping the water into the reservoir of the cleaning device).

The energy balance of the inventive awning can further be improved by solar modules mounted on the underside of the canopy so that the additional solar modules can collect and convert reflected sunlight .

The inventive awning can be used on houses with curved roof structures or at bus stop shelters with curved roots, for example, also connection with greenhouses, pavilions, and similar structures. The awning can be adapted to various types of roof structures having a concave or convex curvature. The energy stored in the storage cells can be used, for example, for operating a climate control unit in the greenhouse. In these embodiments, the frame of the awning can be a component of the constructive parts of the bus stop shelter or the greenhouse.

Since the canopy can provide both a roof as well as a sun protection means, it is possible to save material and thus produce the buildings more cheaply. The awning (comprised of the canopy and the awning frame) is matched to the curvature of the roof structure. The canopy having solar modul strips or support material having solar modul strips mounted thereon can also be suspended from cables with which the awning is then pulled into position. The awning can be manually manipulated or can be moved by a respective motor.

The energy storage means, motors and other electrical devices can be mounted within the hollow space of the components of the structure to which the awning is to be connected.

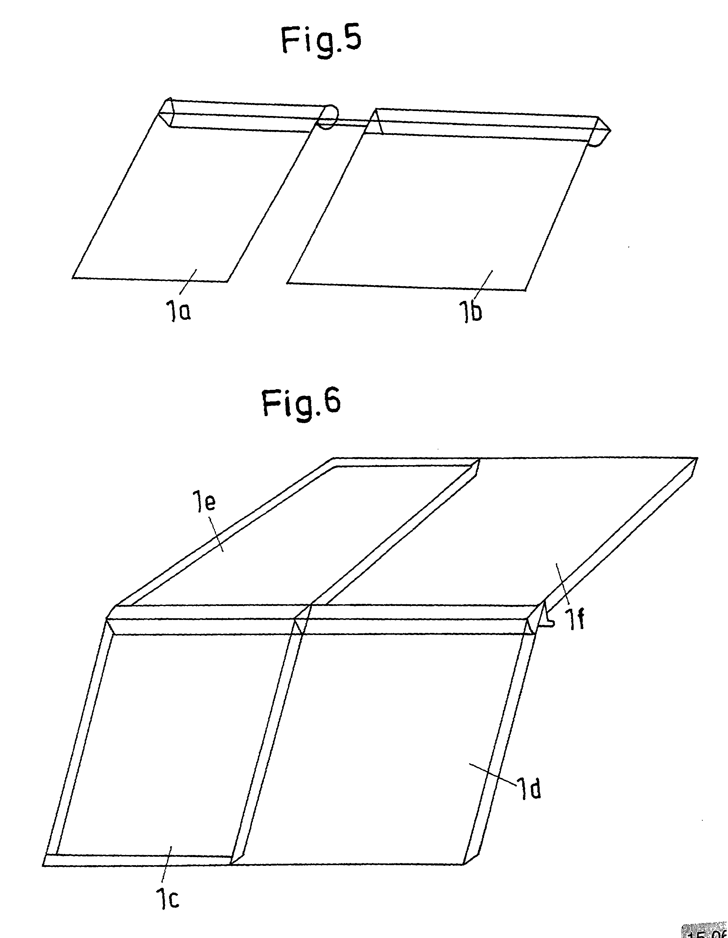

According to another embodiment, it is possible to connect a plurality of awnings 1a, 1b (Fig.5) or 1c, 1d, 1e, 1f (Fig.6) to one another. A common support structure may be provided. It is especially advantageous when such awnings 1c, 1 d, 1e, 1f can be extended from the central support structure (not shown) to both sides (in opposite directions) so that a substantially free standing large surface area awning is provided (see Fig. 6, showing awnings 1c, 1d on one side of the common support structure and awnings 1e, 1f extending on the other side from the common support structure in the opposite direction). As shown in Fig. 6, the awnings can extend at different angles, depending on the position of the sun. All of the awnings may be connected to a central control unit and may have a common central storage cell.

For large buildings (high rise buildings, office buildings, large hotel complexes etc) that have multiple awnings in various locations it may be expedient to have all awnings connected to a central control station that may monitor, in addition to controlling the operation of the awnings (extension, retraction, angle adjustment, cleaning, etc), also the proper function of the solar modules in order to indicate at the central station when a solar module is defective and needs replacement. Also, other malfunctions may also be reported electronically to the central control station so that repair and maintenance personnel can be sent out immediately. Such a central monitoring station can also be operated remote by the contractor who installed the awnings and who offers a service and maintenance contract. To a person skilled in the art, various control and monitoring devices, including computers and sensors, for such a purpose are known and will therefore not be discussed in detail in this context.

Institutions and businesses such as banks have bullet proof glass in their windows in order to provide extra protection. The awning material can also be embodied in a bullet-proof manner and can also be designed such that temperature fluctuations can be compensated. Bullet proof embodiment of the awning material can be realized by providing various layers of Kevlar fabric.

Temperature fluctuation can be compensated by integrating foamed materials and/or integrated paraffins. Such an embodiment retains more heat energy so that people can sit comfortably under the awnings even at night. The preferred size of the inventive awnings is 3 to 4 meters. However, larger or smaller size awnings are also possible.

It is also possible to provide a substantially vertically suspended protective sheet at the awning as a lateral protection.

The visual impression of people sitting under or behind the awning can be improved by providing light-reflecting mirrors at the awning.

However, awning fabric (canopy materials) are known which change according to the exterior light conditions and thus provide a uniform lighting within the space that is covered by the awning.

A further improvement of the awning would be to have a transparent solar module that allows light to pass through so that the space under the awning is not too dark and still illuminated sufficiently. This is also important when the awning is used as an individual vertical window or glass door shade, for example.

The present invention is, of course, in no way restricted to the specific disclosure of the specification and drawings, but also encompasses any modifications within the scope of the appended claims.

## Claims

1. An awning comprising;
a frame;
a flexible canopy (1a) mounted to said frame so as to be retractable into a retracted position and extendable into an extended position;
said canopy (1a) having an upper side and an underside;
said canopy(1a) comprising at least one flexible solar module (2) on said upper side;
said frame comprising a roller (4) onto which said canopy (1a) is rolled in said retracted state;
at least one storage cell storing electrical energy produced by said at least one solar module (2), said at least one storage cell being connected to said at least one solar module **characterised in that** said at least one storage cell is mounted in said roller;
and **in that** said solar modules are solar module strips (2),;
a strip of support material being located between neighbouring solar module strips (2), said support material being light-collecting material which transmits collected light to said solar module strips (2).

2. An awning according to claim 1, **characterized by** a motor (6) mounted inside said roller and connected to said at least one storage cell, wherein said motor (6) is supplied with electrical energy by said at least one storage cell for rotating said roller (4) in order to extend and retract said canopy (1a).

3. An awning according to claim 1, **characterized by** an electrical connector to connect an external electrical consumer to said at least one storage cell .

4. An awning according to claim 1, **characterised by** a cleaning device (20) for cleaning said canopy.

5. An awning according to claim 4, **characterized in that** said cleaning device (20) comprises a cleaning liquid reservoir (17) mounted inside said roller (4) or inside frame portions of a frame.

6. An awning according to claim 5, **characterized by** a collecting device (14) for collecting precipitation and guiding the collected precipitation into said cleaning liquid reservoir (17), wherein said collecting device (14) is connected to a forward end of said canopy (1a) remote from said roller (4) in said extended position.

7. An awning according to claim 6, **characterized by** a pump (15) for pumping the collected precipitation to said cleaning device (20), wherein a shutoff valve (18) is provided for controlling flow to said cleaning liquid reservoir.

8. An awning according to claim 7, **characterized by** a coarse and a fine filter (16) mounted between said collecting device (14) and said cleaning device (20) for filtering the collected precipitation.

9. An awning according to claim 5,wherein said cleaning device (20) further comprises a pump (15) pumping the cleaning liquid onto the surface of that canopy (1a).

10. An awning according to claim 4, **characterized by** a cover covering said canopy in said retracted state, wherein said cleaning device (20) is mounted in that cover (10).

11. An awning according to claim 4, wherein said cleaning device (20) has at least one cleaning brush.

12. An awning according to claim 1, wherein said solar modules of the solar module strips (2) comprise a protective coating that does not impede energy transmission to said solar modules.

13. An awning according to claim 12,wherein said protective coating reduces frictional wear and in water-repellant and/or is soil repellant that does not impede energy transmission to said solar modules.

14. An awning according to claim 1, wherein said frame comprises supports (12a,12b) for streching said canopy (1a) wherein each one of said supports (12a,12b) has a joint (12c) and a looking device (19) for bridging said joint (12c) that when activated (1a), direct said canopy (1a) downwardly when extended.

15. An awning according to claim 1, wherein said at least one storage cell is mounted so as to be exposed to an air current for heat dissipation.

16. An awning according to claim 1,further comprising a cooling device with circulating cooling liquid for dissipating heat of said at least one storage cell.

17. An awning according to claim 16, wherein said cooling device comprise components for recirculating the cooling liquid and wherein said components are mounted at least partially on parts of said frame (12a, 12b) or mounted at least partially on parts of said frame (12a, 12b) or mounted at least partially external to said awning.

18. An awning according to claim 1,wherein said at least one storage cell is a highly efficient capacitor comprised of environmentally friendly materials.

19. An awning according to claim 1, wherein said frame(12a, 12b) comprises a tubular member connected to an end of said canopy (1a) remote from said roller(4), wherein said at least one storage cell is mounted in said tubular member.

20. An awning according to claim 1,wherein said canopy (1a) comprises additional solar modules or solar module strips (2) on said underside.

## Patentansprüche

1. Markise beinhaltet
einen Rahmen
eine bewegliche Markisenbespannung die herausnehmbar und entfernbar ist ,
die Markisenbespannung hat eine untere und eine obere Seite
die Markisenbespannung beinhaltet ein flexibles Solarmodule auf der Oberseite der Rahmen beinhaltet einen Walzenkörper
auf dem die Markisenbespannung aufgerollt werden kann
mindestens ein Energiespeicher speichert elektrische Energie der bei mindestens einem Solarmodule produziert werden kann
mindestens ein Energiespeicher ist mit einem Solarmodule verbunden der in dem Walzenkörper befestigt ist
und dabei sind die Solarmodule Solarmodulstreifen
ein Unterstützungsstreifen ist zwischen zwei Solarzellenstreifen angebracht,
das Unterstützungsmaterial ist ein lichtsammelndes Material das Licht zu solarmodulstreifen transportiert.

2. Markise nach Anspruch 1, **dadurch gekennzeichnet**
**daß** ein Motor mit mindestens einem Energiespeicher im Walzenkörper befestigt ist,
wobei der Motor von mindestens einem Energiespeicher mit Elektrischer Energie versorgt wird, um den Walzenkörper zu drehen und die Markisenbespannung ein und auszufahren.

3. Markise nach Anspruch 1,**dadurch gekennzeichnet**
das ein ausstehender Energieverbraucher mit einer Batterie verbunden ist.

4. Markise nach Anspruch 1,**dadurch gekennzeichnet**
das eine Reinigungsvorrichtung die Markisenbespannung reinigt.

5. Markise nach Anspruch 4,**dadurch gekennzeichnet** das eine Reinigungsvorrichtung mit einer Reinigungsflüssigkeit innerhalb des Walzenkörpers oder innerhalb der Hohlräume des Rahmenkörpers angebracht ist.

6. Markise nach Anspruch 5,**dadurch gekennzeichnet** das eine Sammelschiene zum sammeln von Flüssigkeiten besteht und dieses in einem Reinigungsbehälter fließt und das Wasser aus der Sammelschiene ist mit einem vorderen Ende der Markisenbespannung das sich von der Walze in eine ausgefahrene Position verschiebt.

7. Markise nach dem Anspruch 6, **dadurch gekennzeichnet**
das eine Förderpumpe das gesammelte Regenwasser zu Reinigungszwecken über ein Absperrventil leitet das die Regenwassermenge für den Reinigungswasserbehälter kontrolliert.

8. Markise nach dem Anspruch 7,**dadurch gekennzeichnet**, das ein Grob-und Feinfilter zwischen zwei Sammelschienen angeordnet ist und die Reinigungsvorrichtung das Regenwasser filtert.

9. Markise nach Anspruch 5, **dadurch gekennzeichnet**
das die Reinigungsvorrichtung eine Pumpe betreibt um die Reinigungsflüssigkeit auf die Oberfläche der Markise zu leiten.

10. Markise nach dem Anspruch 4,**dadurch gekennzeichnet**
das eine Abdeckung die Markisenbespannung unter bestimmten Umständen verdeckt und
das die Reinigungsvorrichtung auf der Abdeckung befestigt ist.

11. Markise nach dem Anspruch 4,**dadurch gekennzeichnet**
das eine Reinigungsvorrichtung eine Reinigungsbürste hat.

12. Markise nach dem Anspruch 1,**dadurch gekennzeichnet**
das Solarzellenmodule der Solarzellenstreifen über einen Schutzanstrich verfügen das die Strahlenzufuhr zu den Solarzellen nicht beeinträchtigt.

13. Markise nach dem Anspruch 12,**dadurch gekennzeichnet**
das eine Beschichtung Reibung,Wasser oder Dreckverschmutzung reduziert und dadurch der Strahlungsdurchsatz zu den Solarzellenmoduln nicht erschwert wird.

14. Markise nach dem Anspruch 1,**dadurch gekennzeichnet**
das eine Vorrichtung vorgesehen ist, die die Gelenkarme (12a, 12b) am Spannen der der Markisenbespannung hindert und das jedes Paar Gelenkarme (12a, 12b) eine das Gelenk (12c) überbrückende Sperreinrichtung 19 aufweist.

15. Markise nach dem Anspruch 1,**dadurch gekennzeichnet** das ein Energiespeicher der Luft ausgesetzt ist, um eine Überhitzung zu vermeiden.

16. Markise nach dem Anspruch1,**dadurch gekennzeichnet** das weiter aus mindestens einer bestehenden Kühleinrichtung mit umlaufender Kühlflüssigkeit zum kühlen mindestens eines Energiespeichers verwendet wird.

17. Markise nach dem Anspruch 16,**dadurch gekennzeichnet daß** eine Kühlvorrichtung Einheiten beinhaltet um die Kühlflüssigkeit kreisen zu lassen und deren Teile auf dem Gelenkarm oder außerhalb der Markise befestigt sind.

18. Markise nach dem Anspruch 1,**dadurch gekennzeichnet daß** mindestens ein Energiespeicher ein Hochleistungskondensator ist und aus einem umweltfreundlichen Material besteht .

19. Markise nach dem Anspruch 1,**dadurch gekennzeichnet**,das ein Gelenkträger ein Rohr beinhaltet das mit dem Ende einer Markisenbespannung verbunden ist, entfernt von dem Walzenkörper ,wo mindestens ein Energiespeicher in der Röhre befestigt ist.

20. Markise nach dem Anspruch 1, **dadurch gekennzeichnet**
das die Markisenbespannung zusätzliche Solarzellen oder Solarzellenstreifen auf der Unterseite der Bespannung enthält.

## Revendications

1. la marquise comprend:
un cadre
un toiture amovible (1a)- retractible et escamotable qui présente une partie inférieure et supérieure ;
la toiture (1a)est dotée d'un module solaire flexible (2) fixé sur sa partie supérieure;
le cadre est équipé d'un cylindre (4) autour duquel la toiture (1a)peut s'eurouler lorsqu'elle se trouve en position de repli;
le cylindre dispose d'au moins une cellule énergétique capable de stocker l'énergie électrique pouvant être produite par un module solaire (2);
il existe au moins une cellule énergétique reliée avec l'un des modules solaires contenus dans le cylindre;
et dans ces modules solaires se trouvent des bandes de modules solaires
entre deux brandes de cellules solaires se trouvent des brandes de modules solaires (2)
entre 2 bandes de cellules solaires se trouve une bande de support. le dispositif de support est un materian qui recueille la lumière et la transmet aux bandes de modules solaires.(2)

2. Selon la revendication 1,la marquise est
**caractérisée par** l'existence d'un moteur (6)doté au minimum d'une cellule énergétique située dans le cylindre ; ainsi le moteur est alimenté en énergie électrique par une cellule énergétique,ce qui permet de mettre en mouvement le cylindre et de faire rentrer ou sortir la toiture (1a)

3. Selon la revendication 1, la marquise est est dotée d'un connecteur electrique permettant a un consommateur d'energie exterieur d'être relié a l'une des cellules.

4. Selon la revendication 1, la marquise est équipée d'un systeme de nettoyage (20)qui assure la propreté de la toiture.

5. Selon la revendication 4, la marquise est **caractérisée par le fait que** le dispositif de nettoyage (20) avec le réservoir contenant le liquide adéquat (17)- se trouve a l'intérieur du cylindre (4) ou dans les parties creuses du cadre.

6. Selon la revendication 5, la marquise est dotée d'une gouttière recueillant les eaux de pluie (14) et les déversant dans le réservoir contenant le liquide de nettoyage(17);cette gouttière(14) est située a l'extrêmeté inferieure de la toiture(1a) lorsque celle (4)ci est tendue.

7. Selon la revendication 6,la marquise possède un systèm de pompage(16), qui dirige l'eau recueillie à des fins de nettoyage(14) vens un obturateur- ce qui permet de réguler (18) la quantité d'eau de pluie se trouvant dans le réservoir.

8. Selon la revendication 7, la marquise est **caractérisée par** un system de filtrage( fin et plus grossier)(16)situé entre la gouttière et le dispositif (14)de nettoyage (14)afin de purifier l'eau (10)de pluie recueillie.

9. Selon la revendication 5, la marquise est équipée d'un systèm de nettoyage (20)doté d'une pompe (15)qui propulse le liquide de nettoyage sur la surface de la marquise(1a).

10. Selon la revendication 4, la toiture de la marquise peut dans certaines circonstances,être recouvert par une bâche et la dispositif nettoyage (20) est alors fixe sur la bâche (10).

11. Selon la revendication 4, le dispositif de nettoyage (20)comporte une brosse.

12. Selon l'exigence 1, les modules des bandes de cellules solaires (2)sont dotés d'un enduit protecteur qui ne fait pas obstacle au captage des rayons solaires par les cellules solaires.

13. Selon la revendication 12, ce revêntement de la marquise limite les effets du frottement, de l'eau et de l'encrassement et n'empêche pas non plus les rayons solaires d'atteindre les modules des cellules solaires.

14. Selon la revendication 1,le cadre est doté de supports (12a,12b) permettant de tendre la toiture (1a);chaceun d'eux possede (12a,12b) une jointure(12c) ainsi qu'un (19) obturateur qui enjambe la jointure (12c) et qui lorsqu'il est ouvert (1a), tire la toiture vers lé bag.

15. Selon la revendication 1, la marquise dispose d'une cellule énergétique exposée a'un courant d'air, ce qu permet d'évite toute surchauffe.

16. Selon la revendication 1, la marquise est aussi caractéerisée par le fait que le système de refroidissement avec le liquide de refroidissement - permet de refroiduir au moins une cellule énergétique.

17. Selon la revendication 16, le systèm de refroidissement est doté d'éléments qui permettent au toujours liquide de refaire le même circuit ils sont fixés sur les attaches (12a, 12b)ou a l'extéreur de la marquisé.

18. Selon la revendication 1,au moins l'une des cellules énergetiques est un condensateur à haute capacité et se compose d'un materiau qui n'a pas d'effets nuisibles sur l'environnement.

19. Selon la revendication 1, le cadre (12a,12b)comporte un tube relié à l'une des extrêmités de la toiture 1a, à une certaine distance du cylindre où se trouve au moins une cellule énergétique. Le tube dispose égaiement d'une cellule.

20. Selon la revendication 1, la toiture 1a de la marquise renferme des cellules solaires ou des bandes de cellules solaires supplémentaires sur sa partie inférieure
